# EUROPEAN PATENT APPLICATION

(11) **EP 4 845 020 A1**
(43) Date of publication of application: **25.11.2026**
(21) Application number: 25744600.5
(22) Date of filing: 22.01.2025
(51) Int. Cl.: H02P 9/30

(54) **GENERATOR CONTROL METHOD AND APPARATUS, VEHICLE, AND STORAGE MEDIUM**

(30) Priority: 22.01.2024 CN 202410090132
(71) Applicant: Great Wall Motor Company Limited, Baoding, Hebei 071000 (CN)
(72) Inventor: ZHANG, Badou, Baoding, Hebei 071000 (CN); WU, Yongsheng, Baoding, Hebei 071000 (CN); DAI, Xiaochuan, Baoding, Hebei 071000 (CN); QIN, Shaobo, Baoding, Hebei 071000 (CN); HUANG, Xu, Baoding, Hebei 071000 (CN); LIU, Gang, Baoding, Hebei 071000 (CN); ZHANG, Wenxian, Baoding, Hebei 071000 (CN); WANG, Xuesong, Baoding, Hebei 071000 (CN); LI, Bo, Baoding, Hebei 071000 (CN); YUAN, Xueli, Baoding, Hebei 071000 (CN)
(74) Representative: Michalski Hüttermann & Partner mbB
(86) International application number: PCT/CN2025/073853
(87) International publication number: WO 2025/157161

(57) **Abstract**

The present application provides a generator control method, apparatus, a vehicle, and a storage medium. The method is applied in the field of vehicles and includes: acquiring an available torque of a vehicle generator; controlling the generator to switch from a voltage generation mode to a torque generation mode in response to the available torque being less than a demand torque corresponding to a set voltage value; acquiring an actual output voltage value of the generator in the torque generation mode; and in response to the actual output voltage value being greater than the set voltage value, controlling the generator to switch from the torque generation mode to the voltage generation mode, and controlling the generator to output at the set voltage value in the voltage generation mode. Thus, the generation mode of the generator can be controlled flexibly, the generation process of the generator can be controlled, and strategy control can be performed on switching between the two generation modes, thereby better meeting the electrical power demands of the vehicle and reducing the low battery condition.

## Description

### CROSS-REFERENCE TO RELATED DISCLOSURE

This application claims priority to a Chinese Patent Application filed with the China National Intellectual Property Administration on January 22, 2024, with application number 2024100901321 and titled "GENERATOR CONTROL METHOD, APPARATUS, VEHICLE, AND STORAGE MEDIUM" the entire contents of which are incorporated herein by reference.

### TECHNICAL FIELD

The present application relates to the field of vehicle technologies, and in particular, to a generator control method, apparatus, a vehicle, and a storage medium.

### BACKGROUND

Due to the increasingly serious problems of energy shortage and environmental pollution, energy conservation and emission reduction have become key focuses in the automotive industry. Hybrid electric vehicles (HEVs) have attracted widespread attention due to their better fuel economy and emission performance. For a single-motor hybrid system, common hybrid route layouts currently on the market include P0, P1, P2, P3, and P4. A common generator used in various hybrid route layouts can be an integrated starter generator (ISG). The ISG has functions such as starting and generating electricity. When the engine starts, the ISG converts battery electric energy into kinetic energy, raising the engine speed to the ignition and injection speed point, providing power for engine startup. When the engine is running, the ISG is driven by the engine to work, converting kinetic energy into electrical energy to supply power to the vehicle load and the battery.

However, in actual application, when the engine torque is insufficient and the engine speed is low in an idle state, the generation torque and generated power of the ISG are often too small, causing the ISG to be unable to output normally according to the requested voltage value. This affects a charging rate of the vehicle, and in severe cases may even cause battery depletion.

Based on this, how to better meet the electrical power demands of the vehicle has become an urgent problem to be solved.

### SUMMARY

In a first aspect, an embodiment of this specification provides a generator control method, including:
acquiring an available torque of a vehicle generator;
controlling the vehicle generator to switch from a voltage generation mode to a torque generation mode in response to the available torque being less than a demand torque corresponding to a set voltage value;
acquiring an actual output voltage value of the vehicle generator in the torque generation mode; and
in response to the actual output voltage value being greater than the set voltage value, controlling the vehicle generator to switch from the torque generation mode to the voltage generation mode, and controlling the vehicle generator to output at the set voltage value in the voltage generation mode.

In a second aspect, an embodiment of this specification provides a generator control apparatus, including:
a torque acquisition module, configured to acquire an available torque of a vehicle generator;
a first switching module, configured to control the generator to switch from a voltage generation mode to a torque generation mode in response to the available torque being less than a torque demand corresponding to a set voltage value;
a voltage acquisition module, configured to acquire an actual output voltage value of the generator in the torque generation mode; and
a second switching module, configured to, in response to the actual output voltage value being greater than the set voltage value, control the generator to switch from the torque generation mode to the voltage generation mode, and control the generator to output a voltage of the set voltage value in the voltage generation mode.

In a third aspect, an embodiment of this specification provides a vehicle, including: a memory and a processor. A computer program is stored on the memory and executable on the processor. The computer program is configured to be executed by the processor to implement steps of the method mentioned above.

In a fourth aspect, an embodiment of this specification provides a computer-readable storage medium storing a computer program. When the computer program is executed, the steps of the above method are implemented.

In embodiments of the present specification, by acquiring the available torque of the vehicle generator, when the available torque is less than the demand torque corresponding to the set voltage value, the generator is controlled to switch from the voltage generation mode to the torque generation mode; an actual output voltage value of the generator in the torque generation mode is acquired; and when the actual output voltage value is greater than the set voltage value, the generator is controlled to switch from the torque generation mode to the voltage generation mode and to output a voltage of the set voltage value. By monitoring the available torque of the vehicle generator, when the available torque is less than the demand torque corresponding to the set voltage value, it indicates that the available torque is insufficient and cannot satisfy the target voltage demand. Therefore, the generator needs to adopt torque generation to perform full-power output, so as to reduce outward discharge of the battery as much as possible, satisfy the electrical demand of a heavy vehicle load, and reduce power loss. In the torque generation mode, if the actual output voltage value is greater than the set voltage value, the generator is controlled to switch from the torque generation mode to the voltage generation mode, so as to prevent an excessively high actual output voltage value from causing an over-current phenomenon and producing a large-current impact on the battery and the vehicle load. In this way, the generation mode of the generator can be controlled flexibly, the generation process of the generator can be controlled, and strategy control can be performed on switching between the two generation modes, thereby better meeting the electrical power demands of the vehicle and reducing the low battery condition.

### BRIEF DESCRIPTION OF THE DRAWINGS

FIG. 1 is a schematic diagram of a scenario of a generator control method according to an embodiment of the present specification.
FIG. 2 is a schematic flowchart of a generator control method according to an embodiment of the present specification.
FIG. 3 is a schematic flowchart of a generator control method according to an embodiment of the present specification.
FIG. 4 is an exemplary schematic diagram of a generator control method according to an embodiment of the present specification.
FIG. 5 is an overall flowchart of a generator control method according to an embodiment of the present specification.
FIG. 6 is a schematic structural diagram of a generator control apparatus according to an embodiment of the present specification.
FIG. 7 is a schematic structural diagram of a vehicle according to an embodiment of the present specification.

### DETAILED DESCRIPTION OF THE EMBODIMENTS

The technical solutions in the present disclosure are described clearly and in detail below with reference to the accompanying drawings. Unless otherwise specified, the expression "A/B" means A or B. The expression "and/or" describes an association relationship among associated objects and may indicate three relationships, for example, A and/or B may indicate that A alone exists, both A and B exist, or B alone exists. In addition, in the description of embodiments of the present specification, "a plurality of" refers to two or more than two.In the following, terms such as "first" and "second" are used merely for descriptive purposes and shall not be understood as indicating or implying relative importance or as implicitly indicating the number of indicated technical features. Accordingly, a feature limited by "first" or "second" may expressly or implicitly include one or more such features.

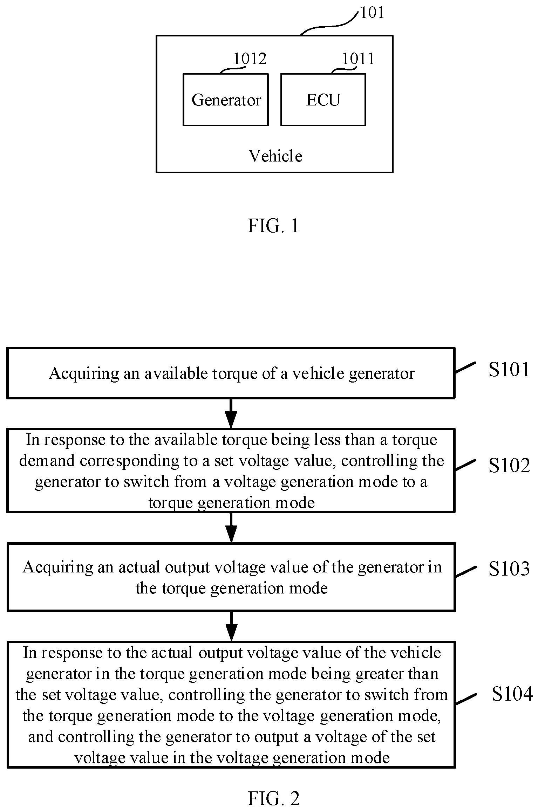

FIG. 1 is a schematic diagram of a scenario of a generator control method according to an embodiment of the present specification.

Exemplarily, as shown in FIG. 1, during travel of a vehicle 101, an Electronic Control Unit (ECU) 1011 obtains a demand power according to a vehicle load and a battery state of charge, and sends a request for a set voltage value to a generator 1012 according to the demand power. The generator generates electricity according to the set voltage value requested by the ECU 1011. However, in actual use, when engine torque is insufficient and engine speed is low while the vehicle is idling, the generation torque and generated power of the generator 1012 are often too small, causing the generator 1012 to be unable to output normally according to the set voltage value, affecting a charging rate of the vehicle and even causing a low battery condition. Usually, the speed of the generator 1012 can be increased by increasing the engine idle speed, thereby increasing the generated power of the generator 1012 to satisfy the vehicle electrical demand. However, as the rotational speed increases, noise, vibration, and harshness (NVH) of the engine also deteriorate accordingly, generating abnormal noise and affecting the driving experience.

Based on the above situation, embodiments of the present specification provide a generator control method capable of acquiring an available torque of a vehicle generator, determining whether to enter a torque generation mode based on the available torque, and then determining whether to switch to a voltage generation mode based on an actual output voltage value in the torque generation mode. In this way, the generation process of the generator can be controlled according to actual conditions under different vehicle operating conditions, the current generation mode of the generator can be determined, and strategy control can be performed on switching between the two generation modes, thereby better meeting electrical power demands of the vehicle and reducing power loss of the vehicle.

The generator control method provided in the present specification is described in detail below with reference to specific embodiments.

FIG. 2 is a schematic flowchart of a generator control method according to an embodiment of the present specification. It should be understood that the method may be applied to the vehicle 101 in FIG. 1, and specifically may be applied to any electronic control unit (ECU) in the vehicle 101.

As shown in FIG. 2, the method in the embodiment of the present specification may include the following steps S101 to S104.

S101: acquiring an available torque of a vehicle generator.

In one embodiment, the vehicle is a hybrid vehicle, and the vehicle generator may be selected according to actual vehicle requirements, but the generator needs to have both a voltage generation mode and a torque generation mode. The voltage generation mode means that the generator responds to an ECU request and outputs a voltage according to a set voltage value to provide electric energy for the vehicle load and the battery. The torque generation mode means that the generator generates electricity based on the available torque (for example, a current maximum available torque), that is, performs full-power output at a current rotational speed. For example, the vehicle generator may be an Integrated Starter Generator (ISG), which has functions such as engine start-stop and regenerative power generation during braking. During operation of the ISG, its torque is affected by multiple factors, including the current, voltage, magnetic flux, and rotational speed of the ISG. Exemplarily, a maximum power allowed for the generator may be divided by a current motor rotational speed to obtain the available torque of the generator.

S102: controlling the generator to switch from a voltage generation mode to a torque generation mode in response to the available torque being less than a demand torque corresponding to a set voltage value.

In one embodiment, after the vehicle is powered on, a driver performs a startup operation. Then, the ECU sends a startup-state request to the generator. After receiving the request, the generator enters a startup state, consumes battery electric energy, and converts it into kinetic energy, driving a crankshaft to rotate to start the engine. When the engine speed is relatively stable, the ECU sends a power-generation-state request and a set-voltage-value request to the generator. The power-generation-state request is used to control the generator to enter a power generation state, and the set-voltage-value request is used to request the generator to output a voltage of the set voltage value. The set voltage value is related to the vehicle load and the type and charge level of the battery. Exemplarily, the set voltage value may be 14 V. Further, electrical energy output at the set voltage value is converted and calculated to obtain the demand torque corresponding to the electrical energy output at the set voltage value. The current available torque is obtained to determine whether the available torque suffices to output electrical energy at the set voltage value. When the available torque is less than the demand torque corresponding to the set voltage value, it indicates that the available torque is insufficient to support output at the set voltage value. Thus, the generator needs to perform full-power output according to the current available torque, so as to reduce battery discharge as much as possible while meeting the high-load electrical demands of the vehicle, thereby reducing the occurrence of power shortage.

S103: acquiring an actual output voltage value of the generator in the torque generation mode.

In one embodiment, when the generator is generating electricity in the torque generation mode, an actual output voltage value in the torque generation mode is acquired. Because vehicle operating conditions are complex and the available torque of the generator also changes accordingly, the actual output voltage value of the generator must be monitored at all times when the generator operates in the torque generation mode, so as to prevent the actual output voltage value from becoming excessively high due to an increase in the available torque of the generator caused by a change in vehicle operating conditions, thereby causing an over-current phenomenon and producing a large-current impact on the battery and the vehicle load. Taking a set voltage value of 14 V as an example, when the generator is currently operating in the torque generation mode and outputs a torque according to a current maximum available torque of 7 N, the corresponding output voltage value is 13.2 V. If a change in vehicle operating conditions causes the available torque to become 13 N, the corresponding output voltage value becomes 15 V, and a large current impact may occur.

S104: in response to the actual output voltage value being greater than the set voltage value, controlling the generator to switch from the torque generation mode to the voltage generation mode, and controlling the generator to output at the set voltage value in the voltage generation mode.

In one embodiment, when the actual output voltage value is not greater than the set voltage value, it indicates that electricity generated according to the current available torque still results in an output lower than the set voltage value, and the generator remains in the torque generation mode. When the actual output voltage value is greater than the set voltage value, it indicates that continuing to generate electricity according to the current available torque will cause an impact, and therefore the generator needs to operate in the voltage generation mode and generate electricity according to the set voltage value, thereby enabling timely switching of the generation mode. It should be noted that limiting the output power of the generator limited by the set voltage value in the voltage generation mode can prevent the voltage generated during full-power output of the generator from being excessively high, thereby avoiding an excessively large voltage difference between the output voltage of the generator and the battery voltage, which in turn prevents an excessively large output current of the generator from impacting and damaging the battery and in-vehicle loads.

In embodiments of the present specification, by acquiring the available torque of the vehicle generator, when the available torque is less than the demand torque corresponding to the set voltage value, the generator is controlled to switch from the voltage generation mode to the torque generation mode. An actual output voltage value of the generator in the torque generation mode is acquired, and when the actual output voltage value is greater than the set voltage value, the generator is controlled to switch from the torque generation mode to the voltage generation mode and to output a voltage of the set voltage value. By monitoring the available torque of the vehicle and the actual output voltage value and comparing them with the set voltage value, automatic switching of the generation mode of the generator can be achieved, thereby adapting to different vehicle operating conditions and better meeting the electrical power demands of the vehicle.

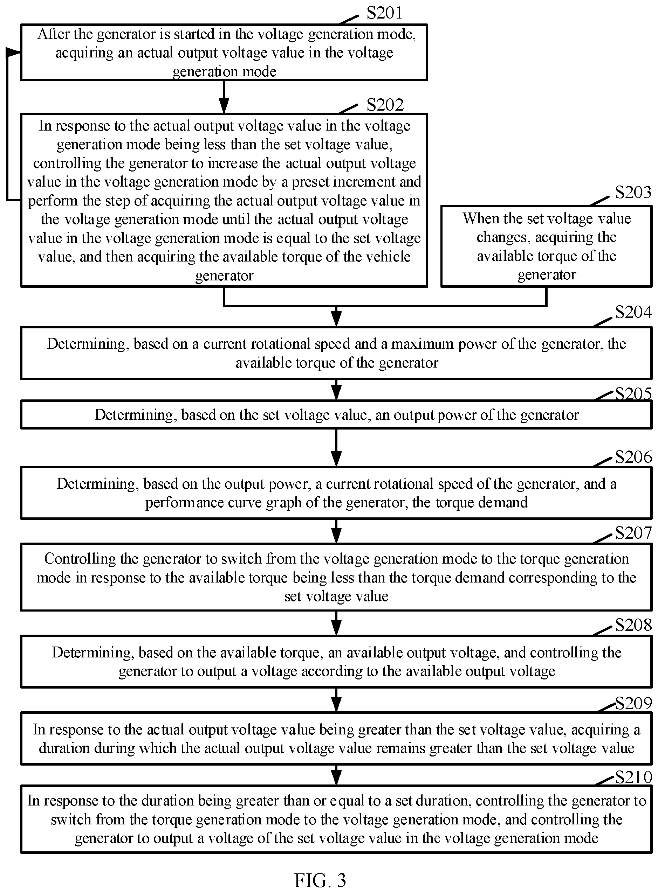

Referring to FIG. 3, FIG. 3 is a schematic flowchart of a generator control method according to an embodiment of the present specification. As shown in FIG. 3, the method in the embodiment of the present specification may include the following steps S201 to S210.

S201: after the generator is started in the voltage generation mode, acquiring an actual output voltage value.

In one embodiment, after receiving a power-generation-state request, the generator enters a power generation state and usually first outputs according to a preset voltage value. The preset voltage value is an empirical value, for example, 10 V, which is lower than the set voltage value. In the process of raising a voltage by using the voltage generation mode, a comparison between the actual output voltage value and the set voltage value is first performed. Whether the actual output voltage value still needs to be adjusted is determined according to a comparison result. If the actual output voltage value is less than the set voltage value, the generator increases the output voltage so as to approach the set voltage value.

S202: in response to the actual output voltage value being less than the set voltage value, controlling the actual output voltage value to increase by a preset increment and performing the step of acquiring the actual output voltage value until the actual output voltage value is equal to the set voltage value, and then acquiring the available torque of the vehicle generator.

In one embodiment, if the actual output voltage value is less than the set voltage value, the actual output voltage value by the preset increment so as to gradually approach the set voltage value. The preset increment is less than or equal to a difference between the actual output voltage value and the set voltage value, so that the actual output voltage value does not exceed the set voltage value required. Specifically, when the voltage generation mode is used, the generator usually does not jump directly from 10 V (which is the initial preset voltage value) to 14 V (which is the set voltage value). Instead, it changes in a certain stepwise manner and has a gradual rising trend, thereby avoiding rapid changes in voltage caused by abrupt increase, which in turn would cause abrupt increase in engine load and large fluctuation in engine speed, and ensuring stable operation of the engine.

After the actual output voltage value becomes equal to the set voltage value, the step of acquiring the available torque of the vehicle generator may be performed. That is, during the process in which the generator starts generating electricity after vehicle startup, whether to switch to the torque generation mode based on the available torque is determined after the actual output voltage value becomes equal to the set voltage value.

S203: when the set voltage value changes, acquiring the available torque of the generator.

In one embodiment, during vehicle operation, when the vehicle load and battery state of charge change, the set voltage value required by the vehicle may change, that is, the ECU sends a set-voltage-value request to the generator again. At this time, the generator needs to redetermine whether the available torque satisfies the demand torque corresponding to the updated set voltage value. It can be understood that as long as it is determined that the current available torque is insufficient to support outputting electrical energy according to the set voltage value, the generator adopts the torque generation mode for power generation.

S204: determining, based on a current rotational speed and a maximum power of the generator, the available torque of the generator.

In one embodiment, a maximum charging power of the vehicle battery and a current consumption power of low-voltage electrical appliances are summed to obtain the maximum power allowed for the motor. The current rotational speed of the generator is acquired, and the maximum power is divided by the current rotational speed to obtain the current maximum available torque of the generator.

S205: determining, based on the set voltage value, an output power of the generator.

In one embodiment, in order to determine the demand torque, the output power of the generator may be calculated based on the set voltage value requested by the ECU and an output current of the generator.

S206: determining, based on the output power, the current rotational speed of the generator, and a performance curve graph of the generator, a demand torque.

In one embodiment, after the output power is obtained, the demand torque corresponding to the set voltage value may be determined based on the output power of the generator, the current rotational speed, and the performance curve graph of the generator. The performance curve graph of the generator is used to describe output power and torque characteristics of the generator. A horizontal axis of the performance curve graph of the generator is the engine rotational speed, in revolutions per minute or rpm, and a vertical axis of the performance curve graph is the generator power and torque. The demand torque may be determined from the performance curve graph of the generator based on the current rotational speed and the output power. It should be noted that the performance curve graph of the generator is affected by multiple factors, including generator model, structure, material, and control strategy. Therefore, different models of generators may have different performance curve graphs, and the performance curve graph of the generator may be determined based on a generator model of the currently used generator.

S207: controlling the generator to switch from the voltage generation mode to the torque generation mode in response to the available torque being less than the demand torque corresponding to the set voltage value.

Specifically, reference may be made to the description of step S102 in the above embodiments of the present specification, and details are not repeated herein.

S208: determining, based on the available torque, an available output voltage, and controlling the generator to output at the available output voltage.

In one embodiment, when the available torque is less than the demand torque corresponding to the set voltage value, the generator adopts the torque generation mode. At this time, the available output voltage value corresponding to the available torque is determined based on the available torque, and the generator is controlled to generate electricity according to the available output voltage value. Exemplarily, a maximum output power that the generator can provide under the available torque may be calculated based on the available torque and specification parameters of the generator. Then, based on the calculated maximum output power and a rated voltage, the available output voltage value that the generator can provide under the current maximum available torque is calculated. It should be noted that when the torque generation mode is adopted, in order to prevent the battery from discharging too quickly, a response needs to be made rapidly. That is, the generator monitors the available torque in real time and immediately generates electricity according to the available torque when requirements of the torque generation mode are satisfied.

S209: in response to the actual output voltage value being greater than the set voltage value, acquiring a duration during which the actual output voltage value remains greater than the set voltage value.

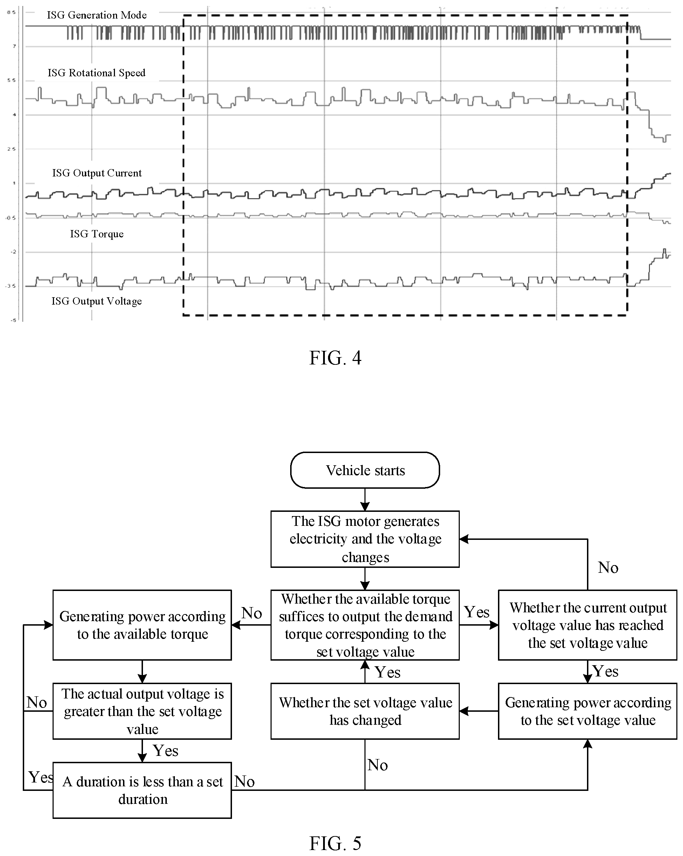

In one embodiment, when the actual output voltage value is greater than the set voltage value, it is necessary to determine the duration during which the actual output voltage value remains greater than the set voltage value. That is, a time determination is made before switching the generation mode. By determining the duration, it can be prevented that, under an abnormal condition, the output voltage value of the generator fluctuates occasionally to become greater than the set voltage value and, after switching to the voltage generation mode, it is then determined that the available torque is insufficient and the generator switches again to the torque generation mode, causing frequent repeated switching of the generator between the two generation modes and resulting in frequent fluctuations in rotational speed, current, and voltage. Referring to FIG. 4, FIG. 4 is an exemplary schematic diagram of a generator control method according to an embodiment of the present specification. In FIG. 4, a determination time for switching a generation mode of an ISG is tested by taking 1 ms as an example. It can be seen from FIG. 4 that frequent switching of the generation mode causes abnormal fluctuations in ISG rotational speed, current, torque, and output voltage.

Optionally, the step of, in response to the actual output voltage value being greater than the set voltage value, acquiring the duration during which the actual output voltage value remains greater than the set voltage value may include the following steps.

S2091: collecting actual output voltage values based on a preset time interval, and starting timing in response to a first actual output voltage value being greater than the set voltage value.

The first actual output voltage value may be the set voltage value collected at any moment. When, among the actual output voltage values collected based on the preset time interval, there is a first actual output voltage value greater than the set voltage value, timing starts.

S2092: when a second actual output voltage value is greater than the set voltage value, continuing timing until an accumulated duration is greater than the set duration.

The second actual output voltage value is collected after the first actual output voltage value. If a second actual output voltage value collected at each preset time interval after the first actual output voltage value is still greater than the set voltage value, timing continues until the accumulated timing duration becomes greater than the set duration, and then it may be determined that the generator needs to switch the generation mode. If the set duration has not yet been reached, timing continues.

S2093: when the second actual output voltage value is less than or equal to the set voltage value, ending timing to obtain the duration.

When the second actual output voltage value collected after the first actual output voltage value is less than or equal to the set voltage value, it indicates that there is currently no excessively high voltage condition. Timing stops, and the duration from the start of timing to that time is obtained.

Exemplarily, when the actual output voltage value is greater than the set voltage value, timing may start. Because the actual output voltage value may be collected in real time based on the preset time interval, each time an actual output voltage value is collected, a comparison step with the set voltage value may be performed. If the actual output voltage value collected after the preset time interval is still greater than the set voltage value, timing continues until the accumulated duration becomes greater than the set duration and timing ends, or, when the actual output voltage value becomes less than or equal to the set voltage value, timing ends and the duration is obtained.

S210: in response to the duration being greater than or equal to a set duration, controlling the generator to switch from the torque generation mode to the voltage generation mode, and controlling the generator to output at the set voltage value in the voltage generation mode.

In one embodiment, when the duration is greater than or equal to the set duration, the generator is controlled to switch from the torque generation mode to the voltage generation mode. It can be understood that switching the generation mode when the duration is greater than or equal to the set duration can improve reliability of generation-mode switching and reduce unnecessary switching caused by occasional voltage fluctuation. The set duration may be selected based on actual conditions. If the set duration is too long, current impact cannot be avoided. If the set duration is too short, determination may fail. Exemplarily, according to experience, the set duration is determined to be 50 ms.

Referring to FIG. 5, FIG. 5 is an overall flowchart of a generator control method according to an embodiment of the present specification. Taking the generator as an ISG as an example, in one feasible implementation, the generator control method may be implemented according to the flowchart. When the vehicle starts and the ECU requests the ISG to generate electricity, the generator control method starts to be executed. Step ①: The ISG generates electricity, and the voltage changes. When the voltage approaches or becomes equal to the set voltage value (which is equivalent to a target voltage or target voltage value in FIG. 5), Step ② is performed. Step ②: The ISG calculates a current available torque and determines whether the current available torque of the ISG suffices to output the demand torque corresponding to the set voltage value; if yes, proceeds to step ③; if no, proceed to step ⑥. Step ③: The ISG determines whether the current output voltage value has reached the set voltage value; if yes, proceeds to step ④; if no, proceeds to step ①. Step ④: The ISG continuously generates power according to the set voltage value, and proceeds to step ⑤. Step ⑤: The ISG determines whether the set voltage value sent by the ECU has changed; if yes, proceeds to step ②; if no, proceeds to step ④. Step ⑥: The ISG calculates the available output voltage based on the current available torque and generates power based on the available output voltage, and proceeds to step ⑦. Step ⑦: The ISG determines whether the actual output voltage is greater than the set voltage value; if yes, proceeds to step ⑧; if no, proceeds to step ⑦. Step ⑧: The ISG determines whether a duration, during which the actual output voltage is greater than the set voltage value, is less than a set duration; if yes, proceeds to step ⑦; if no, proceeds to step ④. When any of the conditions including the engine shutdown, ECU stopping the request for power generation, or the ISG not generating power is met, the generator control method is exited.

In embodiments of the present specification, after the generator is started in the voltage generation mode, an actual output voltage value is acquired. When the actual output voltage value is less than the set voltage value, the generator is controlled to increase the actual output voltage value by a preset increment and the step of acquiring the actual output voltage value is performed until the actual output voltage value is equal to the set voltage value, so that the actual output voltage value has a gradual rising trend, thereby avoiding rapid voltage changes caused by abrupt increase and further avoiding abrupt increase in engine load and large fluctuation in engine rotational speed, and ensuring stability of engine operation. After the set voltage value is reached, the available torque of the vehicle generator is acquired. In addition, when the set voltage value changes, the available torque of the generator is acquired. Therefore, whether in the process in which the generator starts generating electricity after vehicle startup or in the process in which the set voltage value changes during vehicle operation, as long as it is determined that the current available torque is insufficient to output electrical energy according to the set voltage value through power-generation decision, the ISG adopts the torque generation mode for power generation. Further, the available torque of the generator may be determined according to the current rotational speed and the maximum power of the generator, an output power of the generator may be determined according to the set voltage value, and the demand torque may then be determined based on the output power, the current rotational speed, and the performance curve graph of the generator, so that the available torque and the demand torque can be acquired in real time and rapidly. When the available torque is less than the demand torque corresponding to the set voltage value, the generator is controlled to switch from the voltage generation mode to the torque generation mode. In order to prevent the battery from discharging too quickly, a rapid response is needed. Therefore, when requirements of the torque generation mode are satisfied, an available output voltage value is determined based on the current available torque and the generator is controlled to output at the available output voltage value. Further, when the actual output voltage value is greater than the set voltage value, the duration during which the actual output voltage value remains greater than the set voltage value is acquired. When the duration is greater than or equal to the set duration, the generator is controlled to switch from the torque generation mode to the voltage generation mode, and the generator is controlled to output at the set voltage value in the voltage generation mode. By determining the duration and switching the generator from the torque generation mode to the voltage generation mode when the duration is greater than the set duration, frequent switching of the generation mode that would cause frequent fluctuations in rotational speed, current, torque, and voltage is avoided, reliability of generation-mode switching is improved, and unnecessary switching caused by occasional voltage fluctuation is reduced.

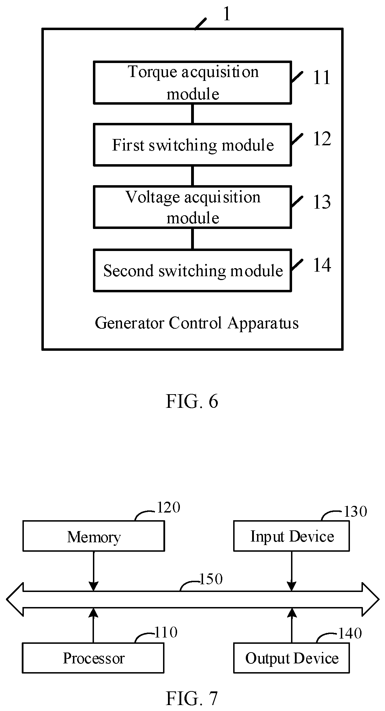

The generator control apparatus provided in embodiments of the present specification is described in detail below with reference to FIG. 6. It should be noted that the generator control apparatus in FIG. 6 is used to execute the method shown in the embodiments of FIGS. 2 to 5. For ease of description, only parts related to embodiments of the present specification are shown, and technical details not disclosed may refer to the embodiments shown in FIGS. 2 to 5.

Referring to FIG. 6, FIG. 6 shows a schematic structural diagram of a generator control apparatus according to one exemplary embodiment of the present specification. The generator control apparatus may be implemented in whole or in part by software, hardware, or a combination of both. The device 1 includes a torque acquisition module 11, a first switching module 12, a voltage acquisition module 13, and a second switching module 14.

The torque acquisition module 11 is configured to acquire an available torque of a vehicle generator.

The first switching module 12 is configured to control the generator to switch from a voltage generation mode to a torque generation mode in response to the available torque being less than a demand torque corresponding to a set voltage value.

The voltage acquisition module 13 is configured to acquire an actual output voltage value of the generator in the torque generation mode.

The second switching module 14 is configured to, in response to the actual output voltage value being greater than the set voltage value, control the generator to switch from the torque generation mode to the voltage generation mode, and control the generator to output at the set voltage value in the voltage generation mode.

Optionally, the torque acquisition module 11 is further configured to, after the generator is started in the voltage generation mode, acquire an actual output voltage value ; and in response to the actual output voltage value being less than the set voltage value, control the actual output voltage value to increase by a preset increment and perform the step of acquiring the actual output voltage value until the actual output voltage value is equal to the set voltage value, and then acquire the available torque of the vehicle generator, where the preset increment is less than or equal to a difference between the actual output voltage value and the set voltage value.

Optionally, the torque acquisition module 11 is further configured to, when the set voltage value changes, acquire the available torque of the generator.

Optionally, the torque acquisition module 11 is specifically configured to determine, based on a current rotational speed and a maximum power of the generator, the available torque of the generator.

Optionally, the torque acquisition module 11 is further configured to determine, based on the set voltage value, an output power of the generator and determine, based on the output power, a current rotational speed of the generator, and a performance curve graph of the generator, the demand torque.

Optionally, the first switching module 12 is further configured to determine, based on the available torque, an available output voltage, and control the generator to output at the available output voltage.

Optionally, the second switching module 14 is specifically configured to, in response to the actual output voltage value being greater than the set voltage value, acquire a duration during which the actual output voltage value remains greater than the set voltage value; and in response to the duration being greater than or equal to a set duration, control the generator to switch from the torque generation mode to the voltage generation mode and control the generator to output at the set voltage value in the voltage generation mode.

It should be noted that, when the generator control apparatus provided in the above embodiments executes the generator control method, division of the functional modules described above is merely used as an example for illustration. In practical applications, the above functions may be allocated to different functional modules as needed, that is, an internal structure of the apparatus may be divided into different functional modules to complete all or part of the functions described above. In addition, the generator control apparatus and the generator control method embodiments provided in the above embodiments belong to the same inventive concept, and the implementation process thereof is described in detail in the method embodiments and is not repeated here.

The serial numbers of the embodiments of the present specification are used merely for description and do not represent superiority or inferiority of the embodiments. In some circumstances, actions or steps recited in the claims may be performed in an order different from that in the embodiments and still achieve desired results. In addition, processes depicted in the drawings do not necessarily require the particular order shown or a sequential order to achieve desired results. In some implementations, multitasking and parallel processing are also possible or may be advantageous.

Embodiments of the present specification further provide a computer-readable storage medium storing a computer program, where the computer program, when executed by a processor, implements the generator control method in the embodiments shown in FIGS. 2 to 5. For a specific execution process, reference may be made to the detailed description of the embodiments shown in FIGS. 2 to 5, and details are not repeated herein.

Referring to FIG. 7, FIG. 7 shows a schematic structural diagram of a vehicle according to an embodiment of the present specification. The vehicle in the present specification may include one or more of the following components: a processor 110, a memory 120, an input device 130, an output device 140, and a bus 150. The processor 110, the memory 120, the input device 130, and the output device 140 may be connected through the bus 150.

The processor 110 may include one or more processing cores. The processor 110 uses various interfaces and lines to connect various parts within the entire vehicle, and executes various functions of a terminal 100 and processes data by running or executing instructions, programs, code sets, or instruction sets stored in the memory 120 and by invoking data stored in the memory 120. Optionally, the processor 110 may be implemented in at least one hardware form selected from digital signal processing (DSP), a field-programmable gate array (FPGA), and a programmable logic array (PLA). The processor 110 may integrate one or a combination of a central processing unit (CPU), a graphics processing unit (GPU), and a modem. The CPU mainly processes the operating system, user interfaces, and applications. The GPU is responsible for rendering and drawing displayed content. The modem is used to process wireless communications. It can be understood that the modem may also not be integrated into the processor 110 and may instead be implemented separately by a communication chip.

The memory 120 may include a random-access memory (RAM) and may also include a read-only memory (ROM). Optionally, the memory 120 includes a computer-readable storage medium. The memory 120 may be used to store instructions, programs, code, code sets, or instruction sets. The memory 120 may include a program storage area and a data storage area. The program storage area may store instructions for implementing an operating system, instructions for implementing at least one function, such as touch function, sound playback function, and image playback function, and instructions for implementing the method embodiments described above. The operating system may be an Android system, including a system deeply developed based on Android, an iOS system developed by Apple, including a system deeply developed based on iOS, or another system.

The memory 120 may be divided into an operating system space and a user space. The operating system runs in the operating system space, and native applications and third-party applications run in the user space. In order to ensure that different third-party applications can all achieve good operating effects, the operating system allocates corresponding system resources to different third-party applications. However, requirements for system resources also differ among different application scenarios of the same third-party application. For example, in a local-resource loading scenario, a third-party application has a relatively high requirement for disk read speed; in an animation-rendering scenario, a third-party application has a relatively high requirement for GPU performance. Because the operating system and the third-party application are independent of each other, the operating system often cannot perceive the current application scenario of the third-party application in time, which causes the operating system to be unable to perform targeted system-resource adaptation according to the specific application scenario of the third-party application.

In order to enable the operating system to distinguish the specific application scenario of a third-party application, data communication between the third-party application and the operating system needs to be connected, so that the operating system can acquire current scenario information of the third-party application at any time and then perform targeted system-resource adaptation based on the current scenario.

The input device 130 is configured to receive input instructions or data, and may include, but is not limited to, a keyboard, a mouse, a camera, a microphone, or a touch device. The output device 140 is configured to output instructions or data, and may include, but is not limited to, a display device and a speaker. In one example, the input device 130 and the output device 140 may be integrated, and the input device 130 and the output device 140 are a touch display screen.

The touch display screen may be designed as a full screen, a curved screen, or a special-shaped screen. The touch display screen may also be designed as a combination of a full screen and a curved screen or a combination of a special-shaped screen and a curved screen, and embodiments of the present specification do not limit this.

In addition, those skilled in the art can understand that the structure of the vehicle shown in the above drawings does not constitute a limitation on the vehicle. The vehicle may include more or fewer components than those shown, may combine some components, or may arrange components differently. For example, the vehicle may further include components such as a radiofrequency circuit, an input unit, a sensor, an audio circuit, a WiFi module, a power supply, and a Bluetooth module, which are not described in detail herein.

In the vehicle shown in FIG. 7, the processor 110 may be used to invoke a computer application program stored in the memory 120 and specifically perform the following operations:
acquiring an available torque of a vehicle generator;
controlling the generator to switch from a voltage generation mode to a torque generation mode in response to the available torque being less than a demand torque corresponding to a set voltage value;
acquiring an actual output voltage value of the generator in the torque generation mode; and
in response to the actual output voltage value being greater than the set voltage value, controlling the generator to switch from the torque generation mode to the voltage generation mode, and controlling the generator to output at the set voltage value in the voltage generation mode.

In one embodiment, when performing the operation of acquiring the available torque of the vehicle generator, the processor 110 specifically performs the following operations:
after the generator is started in the voltage generation mode, acquiring an actual output voltage value; and
in response to the actual output voltage value being less than the set voltage value, controlling the actual output voltage value to increase by a preset increment, and performing the step of acquiring the actual output voltage value until the actual output voltage value is equal to the set voltage value, and then acquiring the available torque of the vehicle generator.

In one embodiment, when performing the step of acquiring the available torque of the vehicle generator, the processor 110 specifically performs the following operation:
when the set voltage value changes, acquiring the available torque of the generator.

In one embodiment, the processor 110 may further perform the following steps:
determining, based on the set voltage value, an output power of the generator; and
determining, based on the output power, a current rotational speed of the generator, and a performance curve graph of the generator, the demand torque.

In one embodiment, after performing the step of controlling the generator to switch from the voltage generation mode to the torque generation mode in response to the available torque being less than the demand torque corresponding to the set voltage value, the processor 110 further performs the following steps:
determining, based on the available torque, an available output voltage, and controlling the generator to output at the available output voltage.

In one embodiment, when performing the step of, in response to the actual output voltage value being greater than the set voltage value, controlling the generator to switch from the torque generation mode to the voltage generation mode and controlling the generator to output at the set voltage value in the voltage generation mode, the processor 110 specifically performs the following steps:
in response to the actual output voltage value being greater than the set voltage value, acquiring a duration during which the actual output voltage value remains greater than the set voltage value; and
in response to the duration being greater than or equal to a set duration, controlling the generator to switch from the torque generation mode to the voltage generation mode, and controlling the generator to output at the set voltage value in the voltage generation mode.

In embodiments of the present specification, by acquiring the available torque of the vehicle generator, when the available torque is less than the demand torque corresponding to the set voltage value, the generator is controlled to switch from the voltage generation mode to the torque generation mode; an actual output voltage value of the generator in the torque generation mode is acquired; and when the actual output voltage value is greater than the set voltage value, the generator is controlled to switch from the torque generation mode to the voltage generation mode and to output a voltage of the set voltage value. By monitoring the available torque of the vehicle and the actual output voltage value and comparing them with the set voltage value, automatic switching of the generation mode of the generator can be achieved, thereby adapting to different vehicle operating conditions and better meeting the electrical power demands of the vehicle.

Further, after the generator is started in the voltage generation mode, an actual output voltage value is acquired. When the actual output voltage value is less than the set voltage value, the generator is controlled to increase the actual output voltage value by a preset increment and the step of acquiring the actual output voltage value is performed until the actual output voltage value is equal to the set voltage value, so that the actual output voltage value has a gradual rising trend, thereby avoiding rapid voltage changes caused by abrupt increase and further avoiding abrupt increase in engine load and large fluctuation in engine rotational speed, and ensuring stability of engine operation. After the set voltage value is reached, the available torque of the vehicle generator is acquired. In addition, when the set voltage value changes, the available torque of the generator is acquired. Therefore, whether in the process in which the generator starts generating electricity after vehicle startup or in the process in which the set voltage value changes during vehicle operation, as long as it is determined that the current available torque is insufficient to output electrical energy according to the set voltage value through power-generation decision, the ISG adopts the torque generation mode for power generation. Further, the available torque of the generator may be determined according to the current rotational speed and the maximum power of the generator, an output power of the generator may be determined according to the set voltage value, and the demand torque may then be determined based on the output power, the current rotational speed, and the performance curve graph of the generator, so that the available torque and the demand torque can be acquired in real time and rapidly. When the available torque is less than the demand torque corresponding to the set voltage value, the generator is controlled to switch from the voltage generation mode to the torque generation mode. In order to prevent the battery from discharging too quickly, a rapid response is needed. Therefore, when requirements of the torque generation mode are satisfied, an available output voltage value is determined based on the current available torque and the generator is controlled to output at the available output voltage value. Further, when the actual output voltage value is greater than the set voltage value, the duration during which the actual output voltage value remains greater than the set voltage value is acquired. When the duration is greater than or equal to the set duration, the generator is controlled to switch from the torque generation mode to the voltage generation mode, and the generator is controlled to output at the set voltage value in the voltage generation mode. By determining the duration and switching the generator from the torque generation mode to the voltage generation mode when the duration is greater than the set duration, frequent switching of the generation mode that would cause frequent fluctuations in rotational speed, current, torque, and voltage is avoided, reliability of generation-mode switching is improved, and unnecessary switching caused by occasional voltage fluctuation is reduced.

In addition, embodiments of the present specification provide a computer program product including a computer program. When the computer program is executed by a processor of a vehicle, the processor is caused to at least implement the generator control method provided in the embodiments shown in FIGS. 2 to 5.

Those skilled in the art can understand that all or part of the processes in the method embodiments described above may be implemented by instructing related hardware through a computer program. The foregoing program may be stored in a computer-readable storage medium. When the program is executed, it may include the processes of the method embodiments described above. The foregoing storage medium may be, for example, a magnetic disk, an optical disc, a ROM, or a RAM.

The foregoing descriptions are merely preferred embodiments of the present specification and are not intended to limit the protection scope of the present specification. Any equivalent change made according to the claims of the present specification shall fall within the scope covered by the present specification

## Claims

1. A generator control method, comprising:
acquiring an available torque of a vehicle generator;
controlling the vehicle generator to switch from a voltage generation mode to a torque generation mode in response to the available torque being less than a demand torque corresponding to a set voltage value;
acquiring an actual output voltage value of the vehicle generator in the torque generation mode; and
in response to the actual output voltage value being greater than the set voltage value, controlling the vehicle generator to switch from the torque generation mode to the voltage generation mode, and controlling the vehicle generator to output at the set voltage value in the voltage generation mode.

2. The method according to claim 1, wherein the acquiring the available torque of the vehicle generator comprises:
after the vehicle generator is started in the voltage generation mode, acquiring an actual output voltage value; and
in response to the actual output voltage value being less than the set voltage value, controlling the actual output voltage value to increase by a preset increment, and performing the step of acquiring the actual output voltage value until the actual output voltage value is equal to the set voltage value, and then acquiring the available torque of the vehicle generator;
wherein the preset increment is less than or equal to a difference between the actual output voltage value and the set voltage value.

3. The method according to claim 1, wherein the acquiring the available torque of the vehicle generator comprises:
when the set voltage value changes, acquiring the available torque of the vehicle generator.

4. The method according to any one of claims 1 to 3, wherein the acquiring the available torque of the vehicle generator comprises:
determining, based on a current rotational speed and a maximum power of the vehicle generator, the available torque of the vehicle generator.

5. The method according to claim 1, further comprising:
determining, based on the set voltage value, an output power of the vehicle generator; and
determining, based on the output power, a current rotational speed of the vehicle generator, and a performance curve graph of the vehicle generator, the demand torque.

6. The method according to claim 5, further comprising:
acquiring a model of the vehicle generator; and
determining, based on the model of the vehicle generator, the performance curve graph of the vehicle generator.

7. The method according to claim 1, after the controlling the vehicle generator to switch from the voltage generation mode to the torque generation mode in response to the available torque being less than the demand torque corresponding to the set voltage value, further comprising:
determining, based on the available torque, an available output voltage, and controlling the vehicle generator to output at the available output voltage.

8. The method according to claim 1, wherein the in response to the actual output voltage value being greater than the set voltage value, controlling the vehicle generator to switch from the torque generation mode to the voltage generation mode, and controlling the vehicle generator to output at the set voltage value in the voltage generation mode comprises:
in response to the actual output voltage value being greater than the set voltage value, acquiring a duration during which the actual output voltage value remains greater than the set voltage value; and
in response to the duration being greater than or equal to a set duration, controlling the vehicle generator to switch from the torque generation mode to the voltage generation mode, and controlling the vehicle generator to output at the set voltage value in the voltage generation mode.

9. The method according to claim 8, wherein the in response to the actual output voltage value being greater than the set voltage value, acquiring the duration during which the actual output voltage value remains greater than the set voltage value comprises:
collecting actual output voltage values based on a preset time interval, and starting timing in response to a first actual output voltage value being greater than the set voltage value;
if a second actual output voltage value is greater than the set voltage value, continuing timing until an accumulated duration is greater than the set duration, the second actual output voltage being collected after the first actual output voltage; and
if the second actual output voltage value is less than or equal to the set voltage value, ending timing to obtain the duration.

10. A generator control apparatus, comprising:
a torque acquisition module, configured to acquire an available torque of a vehicle generator;
a first switching module, configured to control the generator to switch from a voltage generation mode to a torque generation mode in response to the available torque being less than a torque demand corresponding to a set voltage value;
a voltage acquisition module, configured to acquire an actual output voltage value of the generator in the torque generation mode;
a second switching module, configured to, in response to the actual output voltage value being greater than the set voltage value, control the generator to switch from the torque generation mode to the voltage generation mode, and control the generator to output a voltage of the set voltage value in the voltage generation mode.

11. The device according to claim 10, wherein the torque acquisition module is further configured to:
after the generator is started in the voltage generation mode, acquire an actual output voltage value; and
in response to the actual output voltage value being less than the set voltage value, control the actual output voltage value to increase by a preset increment, and perform the step of acquiring the actual output voltage value until the actual output voltage value is equal to the set voltage value, and then acquire the available torque of the vehicle generator;
wherein the preset increment is less than or equal to a difference between the actual output voltage value and the set voltage value.

12. The device according to claim 10, wherein the first switching module is further configured to:
determine, based on the available torque, an available output voltage, and control the generator to output a voltage according to the available output voltage.

13. The device according to claim 10, wherein the second switching module is configured to:
in response to the actual output voltage value being greater than the set voltage value, acquire a duration during which the actual output voltage value remains greater than the set voltage value; and
in response to the duration being greater than or equal to a set duration, control the generator to switch from the torque generation mode to the voltage generation mode, and control the generator to output a voltage according to the set voltage value in the voltage generation mode.

14. A vehicle, comprising: a processor and a memory; wherein the memory stores a computer program, and the computer program is configured to be loaded and executed by the processor to implement steps of the method according to any one of claims 1 to 9.

15. A computer-readable storage medium, wherein the computer-readable storage medium stores a computer program, and when the computer program is executed, the method according to any one of claims 1 to 9 are implemented.
